# EUROPÄISCHE PATENTSCHRIFT

(11) **EP 3 668 135 B1**
(45) Veröffentlichungstag und Bekanntmachung des Hinweises auf die Patenterteilung: **09.12.2020**
(21) Anmeldenummer: 18212665.6
(22) Anmeldetag: 14.12.2018
(51) Int. Cl.: H04W 12/06, H04L 9/32, G07C 9/27, H04W 12/08, H04L 29/06, H04W 88/04, G07C 9/00

(54) **AUTORISIERUNGSVERFAHREN ZUM FREIGEBEN ODER SPERREN VON RESSOURCEN UND ENDGERÄT**
AUTHORIZATION METHOD FOR ENABLING OR DISABLING RESOURCES AND TERMINAL
PROCÉDÉ D'AUTORISATION DESTINÉ À LA LIBÉRATION OU AU BLOCAGE DE RESSOURCES ET TERMINAL

(43) Veröffentlichungstag der Anmeldung: 17.06.2020
(60) Teilanmeldung: 19215879.8
(73) Patentinhaber: Deutsche Telekom AG, 53113 Bonn (DE)
(72) Erfinder: BÜRGER, Danilo, 86199 Augsburg (DE); PÜTZ, Florian, 60325 Frankfurt/M (DE); ANGERMANN, Frank, 01159 Dresden (DE)
(74) Vertreter: Vossius & Partner Patentanwälte Rechtsanwälte mbB

(56) Entgegenhaltungen:
- WO-A1-2018/177720
- US-A1- 2009 158 402
- US-A1- 2014 201 517

## Beschreibung

Die Erfindung befasst sich mit einem Autorisierungsverfahren zum Freigeben oder Sperren von Ressourcen, wobei das Verfahren auch offline verwendet werden kann. Ferner betrifft die Erfindung ein entsprechendes Endgerät.

In herkömmlichen Autorisierungsverfahren für Transaktionen oder Datenübermittlung zwischen einem Benutzer, einem Anbieter und einem Autorisierenden muss stets eine Verbindung zwischen den Handelnden bestehen. In der Regel wird die Anfrage des Benutzers an den Anbieter gesendet, der beim Autorisierenden eine Freigabe ersucht. Die Antwort über die Ressourcenfreigabe wird dann wieder an den Anbieter übermittelt, der die Ressource dann an den Benutzer freigibt oder sie sperrt. Hierfür muss allerdings stets eine Verbindung zwischen Benutzer und Anbieter sowie zwischen Anbieter und Autorisierendem bestehen. Ist dies nicht der Fall, kann eine Autorisierung gegebenenfalls nicht erfolgen.

Die US 2014/201517 A1, WO 2018/177720 A1 oder US 2009/158402 A1 betreffen verschiedenen bekannte Autorisierungsverfahren.

Aufgabe der vorliegenden Erfindung ist es somit, ein Verfahren bereitzustellen, das es ermöglicht, auch offline, d.h. ohne aktive Verbindung zwischen Anbieter und Autorisierendem und/oder zwischen Endgerät und Autorisierendem, eine Autorisierung und Ressourcenfreigabe oder -sperrung durchzuführen. Diese Aufgabe wird durch die vorliegende Erfindung gelöst, die in den Patentansprüchen spezifiziert ist..

Gemäß einem ersten Aspekt wird ein Autorisierungsverfahren zur Freigabe oder zum Sperren von Ressourcen bereitgestellt, das die folgenden Schritte aufweist:
- Senden, über Mittel zur drahtlosen Kommunikation, einer Ressourcenanfrage von einem Endgerät an einen Anbieter, wobei das Senden über einen Mittler erfolgt.
- Senden, über Mittel zur drahtlosen Kommunikation, einer Autorisierungsanfrage vom Anbieter zum Endgerät, wobei das Senden über den Mittler erfolgt.
- Senden, über Mittel zur drahtlosen Kommunikation, der Autorisierungsanfrage vom Endgerät zu einem Autorisierenden.
- Senden, über Mittel zur drahtlosen Kommunikation, eines Belegs mit einer Autorisierungsantwort vom Autorisierenden zum Endgerät.
- Senden, über Mittel zur drahtlosen Kommunikation, des Belegs vom Endgerät zum Anbieter und
- Freigabe oder Sperren der Ressource entsprechend der im Beleg enthaltenen Autorisierungsantwort.

Bevorzugt ist die Autorisierungsanfrage mit einem privaten Schlüssel des Anbieters signiert und enthält einen öffentlichen und einen privaten Teil. Der öffentliche Teil der Autorisierungsanfrage ist für das Endgerät zugänglich und der private Teil der Autorisierungsanfrage ist mit einem öffentlichen Schlüssel des Autorisierenden verschlüsselt.

Dieser erste Aspekt berifft das Szenario, dass der Anbieter gegenüber dem Autorisierenden Offline ist.

Ein zweiter Aspekt betrifft das Szenario, dass das Endgerät gegenüber dem Autorisierenden offline ist. Der zweite Aspekt ist sowohl separat erfindungsgemäß als auch in Ergänzung zum ersten Aspekt, also in Kombination mit der ersten Aspekt. Falls demnach zeitweise keine Verbindung zwischen Endgerät und Autorisierendem besteht, weil das Endgerät sich gegenüber dem Autorisierenden in einem Offline-Modus befindet, weist das erfindungsgemäße Autorisierungsverfahren - in Abwandlung vom bzw. Ergänzung zum geschilderten Autorisierungsverfahren des ersten Aspekts - die folgenden Schritte auf:
- Senden, über Mittel zur drahtlosen Kommunikation, einer Ressourcenanfrage von einem Endgerät an einen Anbieter, wobei das Senden über einen Mittler erfolgt.
- Senden, über Mittel zur drahtlosen Kommunikation, einer Autorisierungsanfrage vom Anbieter zum Endgerät, wobei das Senden über den Mittler erfolgt.
- Senden, über Mittel zur drahtlosen Kommunikation, einer Autorisierungsbestätigung mit einem vom Autorisierenden im Vorhinein ausgestellten Zertifikat vom Endgerät an den Anbieter und
- Freigabe oder Sperren der Ressource entsprechend des Belegs mit dem Zertifikat. Hierbei wird davon ausgegangen, dass auch der Anbieter gegenüber dem Autorisierenden offline ist.

Gemäß einem weiteren Aspekt (nicht beansprucht), in dem das Endgerät offline ist, der Anbieter gegenüber dem Autorisierenden aber online ist, weist das Verfahren folgende Schritte auf:
- Senden, über Mittel zur drahtlosen Kommunikation, einer Ressourcenanfrage von einem Endgerät an einen Anbieter, wobei das Senden über einen Mittler erfolgt.
- Senden, über Mittel zur drahtlosen Kommunikation, einer Autorisierungsanfrage vom Anbieter zum Autorisierenden.
- Senden, über Mittel zur drahtlosen Kommunikation, einer identifizierten Autorisierungsanfrage vom Autorisierenden an den Anbieter.
- Senden, über Mittel zur drahtlosen Kommunikation, der identifizierten Autorisierungsanfrage vom Anbieter an das Endgerät, vorzugsweise über den Mittler.
- Anlegen, durch das Endgerät, einer lokalen Bestätigung, und
- Senden, über Mittel zur drahtlosen Kommunikation, dieser Bestätigung vom Endgerät an den Anbieter, vorzugsweise über den Mittler.
- Senden der Bestätigung vom Anbieter an den Autorisierenden.
- Validieren der Bestätigung durch den Autorisierenden und
- Senden einer Autorisierungsantwort vom Autorisierenden an den Anbieter zurück. Abschließend erfolgt die Freigabe oder das Sperren der Ressource durch den Anbieter an das Endgerät.

Der dritte Aspekt ist sowohl separat erfindungsgemäß als auch in Ergänzung zum ersten oder zweiten Aspekt, also in Kombination mit dem ersten oder zweiten Aspekt.

Das erfindungsgemäße Verfahren weist vorzugsweise ferner das Bereitstellen eines öffentlichen und eines privaten Schlüssels jeweils für den Anbieter und den Autorisierenden auf und Anbieter und Autorisierender kennen jeweils den anderen öffentlichen Schlüssel.

Bevorzugt ist die Autorisierungsanfrage gemäß dem dritten Aspekt mit einem privaten Schlüssel des Endgeräts signiert und enthält einen öffentlichen und einen privaten Teil. Der öffentliche Teil der Autorisierungsanfrage ist für den Anbieter zugänglich und der private Teil der Autorisierungsanfrage ist mit einem öffentlichen Schlüssel des Autorisierenden verschlüsselt.

Das Senden wird bevorzugt mittels einer Vorrichtung zur drahtlosen Datenübertragung durchgeführt. Die Vorrichtung zur drahtlosen Datenübertragung weist bevorzugt Nahfeldkommunikation, NFC, Bluetooth LE, QR Code, Barcode oder Ton auf.

Der Mittler kann eine Anwendung auf dem Endgerät sein.

Die Erfindung umfasst ferner gemäß einem weiteren Aspekt ein Endgerät zum Freigeben oder Sperren von Ressourcen, wobei das Endgerät Mittel zur drahtlosen Kommunikation aufweist, die zum Senden einer Ressourcenanfrage von dem Endgerät an einen Anbieter eingerichtet sind, wobei das Senden über einen Mittler erfolgt. Die Mittel zur drahtlosen Kommunikation sind ferner dazu eingerichtet, eine Autorisierungsanfrage vom Anbieter über den Mittler zum Endgerät zu empfangen. Ferner sind die Mittel zur drahtlosen Kommunikation eingerichtet, eine Autorisierungsanfrage vom Endgerät zu einem Autorisierenden zu senden, einen Beleg mit einer Autorisierungsantwort vom Autorisierenden zum Endgerät zu empfangen und den Beleg vom Endgerät zum Anbieter zu senden.

Die Mittel zur drahtlosen Kommunikation sind, falls zeitweise keine Verbindung zwischen Endgerät und Autorisierendem besteht, weil das Endgerät sich in einem Offline-Modus befindet, ferner eingerichtet, eine Ressourcenanfrage von dem Endgerät an einen Anbieter zu senden, wobei das Senden über einen Mittler erfolgt, eine Autorisierungsanfrage vom Anbieter über den Mittler zum Endgerät zu empfangen und einen Beleg mit einem vom Autorisierenden im Vorhinein ausgestellten Zertifikat vom Endgerät an den Anbieter zu senden.

Gemäß einem weiteren Aspekt umfasst die Erfindung ferner ein Endgerät zum Freigeben oder Sperren von Ressourcen, wobei das Endgerät Mittel zur drahtlosen Kommunikation aufweist eingerichtet zum Senden einer Ressourcenanfrage von dem Endgerät an einen Anbieter, wobei das Senden über einen Mittler erfolgt. Ferner weist der Anbieter Mittel zur drahtlosen Kommunikation auf. Die Mittel zur drahtlosen Kommunikation des Anbieters sind ferner eingerichtet, eine Autorisierungsanfrage vom Anbieter zum Autorisierenden zu senden, und eine identifizierte Autorisierungsanfrage vom Autorisierenden an den Anbieter zu empfangen. Weiterhin sind die Mittel zur drahtlosen Kommunikation des Anbieters eingerichtet, die identifizierte Autorisierungsanfrage vom Anbieter über den Mittler an das Endgerät zu senden. Das Endgerät ist eingerichtet, eine lokale Bestätigung anzulegen und, über Mittel zur drahtlosen Kommunikation, diese Bestätigung vom Endgerät über den Mittler an den Anbieter zu senden. Die Mittel zur drahtlosen Kommunikation des Anbieters sind ferner eingerichtet, die Bestätigung vom Anbieter an den Autorisierenden zu senden, die Bestätigung durch den Autorisierenden zu validieren und eine Autorisierungsantwort vom Autorisierenden an den Anbieter zurück zu empfangen.

Falls zeitweise keine Verbindung zwischen Anbieter und Autorisierendem besteht, sind die Mittel zur drahtlosen Kommunikation des Endgeräts ferner eingerichtet eine Ressourcenanfrage von einem Endgerät an einen Anbieter zu senden, wobei das Senden über einen Mittler erfolgt, eine Autorisierungsanfrage vom Anbieter über den Mittler zum Endgerät zu empfangen, wobei das Senden über den Mittler erfolgt, und eine Autorisierungsbestätigung vom Endgerät an den Anbieter zu senden und mit einem im Vorhinein ausgestellten Zertifikat zu vergleichen.

Die vorliegende Erfindung wird anhand der Zeichnungen verdeutlicht. Es zeigen
- Fig. 1: ein Ablaufdiagramm einer beispielhaften Ausführungsform
- Fig. 2: ein Ablaufdiagramm einer beispielhaften Ausführungsform; und
- Fig. 3: ein beispielhaftes Verfahren für den Fall, dass das Endgerät offline ist.

Erfindungsgemäß wird vorausgesetzt, dass ein Autorisierender (Resource Owner), der über eine Autorisierung einer Ressource entscheidet, ein Anbieter (Resource Provider), der eine Ressource bereitstellt, und ein Benutzer bzw. Endgerät (Client) vorhanden sind. Auch ein Mittler (Agent) ist vorgesehen, der im Auftrag des Benutzers den Zugriff auf eine Ressource beantragt, wobei der Mittler aber auch eine Anwendung auf dem Endgerät sein kann.

Es besteht eine Verbindung zwischen Endgerät und Autorisierendem sowie zwischen Endgerät und Anbieter, nicht jedoch zwischen Anbieter und Autorisierendem. Mit anderen Worten, im Sinne des Zugangs zum Autorisierenden ist das Endgerät online, der Anbieter aber offline. Diese Verbindung kann drahtlos oder nicht drahtlos erfolgen. Desweiteren besitzen Anbieter und Autorisierender jeweils ein privates/öffentliches Schlüsselpaar, wobei dem jeweiligen anderen der öffentliche Schlüssel bekannt ist. Die oben genannten Begrifflichkeiten sind jeweils synonym zu verstehen.

Da das Endgerät online ist und der Anbieter offline, muss der Anbieter also den öffentlichen Schlüssel des Autorisierenden kennen, um eine sichere und geheime Kommunikation zwischen Anbieter und Autorisierendem über das Endgerät gewährleisten zu können. Es darf also diejenige Partei, die mit dem Autorisierenden kommuniziert, nicht die Möglichkeit haben, Informationen einsehen oder ändern zu können, die vom Anbieter nur für den Autorisierenden gedacht sind.

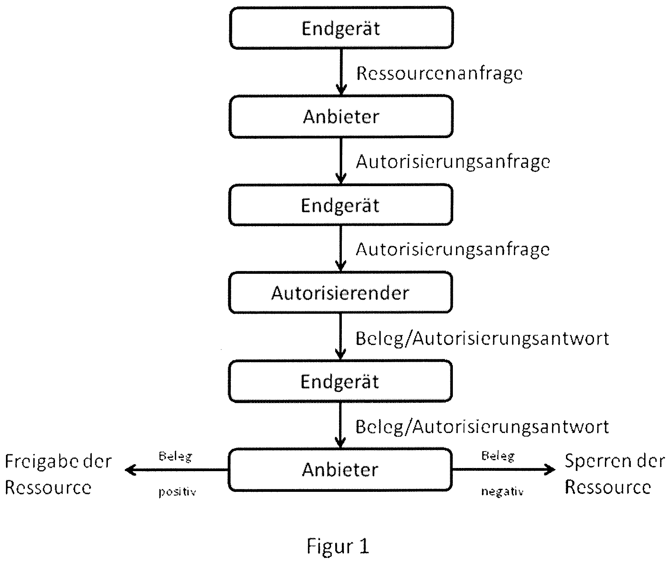

Bezugnehmend auf Fig. 1 weist das Verfahren die folgenden Schritte auf, wobei das Senden von Daten vom Endgerät über den Mittler erfolgen kann oder direkt vom Endgerät durchgeführt werden kann: Das Endgerät fragt eine Ressource beim Anbieter an. Nachdem das Endgerät eine Ressourcenanfrage an den Anbieter gesendet hat, übermittelt der Anbieter eine lokale Autorisierungsanfrage zurück an das Endgerät. Diese Autorisierungsanfrage ist mit dem öffentlichen Schlüssel des Autorisierenden verschlüsselt und mit dem privaten Schlüssel des Anbieters signiert. Das Endgerät übermittelt die lokale Autorisierungsanfrage an den Autorisierenden. Der Autorisierende erteilt oder verweigert die Autorisierung und sendet einen Beleg mit der Autorisierungsantwort zurück an das Endgerät. Der Beleg ist mit dem öffentlichen Schlüssel des Anbieters verschlüsselt und mit dem privaten Schlüssel des Autorisierenden signiert. Der Beleg wird dann vom Endgerät an den Anbieter weitergesendet. Der Anbieter validiert dann den Beleg und vergleicht ihn mit der lokalen Autorisierungsanfrage. Das heißt, der Anbieter wertet die Autorisierungsantwort aus und gibt die Ressource entsprechend frei oder sperrt sie.

Die Autorisierungsanfrage ist dabei mit dem privaten Schlüssel des Anbieters signiert und enthält einen öffentlichen Teil und einen privaten Teil. Der öffentliche Teil ist dabei unter anderem zugänglich für den Mittler und das Endgerät, der private Teil für den Autorisierenden. Der private Teil der Autorisierungsanfrage ist mit dem öffentlichen Schlüssel des Autorisierenden verschlüsselt, der dem Anbieter bekannt ist. Somit können Autorisierender und Anbieter vertraulich und fälschungssicher über eine dritte Instanz, das Endgerät bzw. den Mittler, kommunizieren und dabei der dritten Instanz Daten über die Autorisierung bereitstellen. Dieses Verfahren kann auch asynchron und zeitversetzt angewendet werden.

Um die mehrfache Verwendung von Autorisierungsanfragen ausschließen zu können, kann eine eindeutige Identifikation in der Autorisierungsanfrage verwendet werden, welche im Beleg zurückgesendet wird. Bevorzugt ist jede Identifikation nur für je eine Transaktion gültig.

Die Kommunikation mit dem Autorisierenden (auch als Backend bezeichnet) erfolgt bevorzugt verschlüsselt via HTTPS mit TLS 1.2+. Die Kommunikation zwischen Endgerät und Anbieter erfolgt bevorzugt über QR Code, Barcode, NFC, Bluetooth LE, Ton oder dergleichen.

Das Verfahren für den Fall, dass das Endgerät offline ist, der Anbieter jedoch online ist, wird im Folgenden näher beschrieben. Das Endgerät stellt lokal eine Ressourcenanfrage an den Anbieter, wobei dies über einen Mittler erfolgen kann. Die Autorisierungsanfrage zur Freigabe einer Ressource wird vom Anbieter an den Autorisierenden übermittelt, der einen identifizierten Autorisierungsauftrag, der der Autorisierungsanfrage zugeordnet ist, zurücksendet. Dieser Autorisierungsauftrag ist mit dem privaten Schlüssel des Autorisierers signiert und dem öffentlichen Schlüssel des Endgerätes verschlüsselt. Der Anbieter übermittelt den Autorisierungsauftrag an das Endgerät, ebenfalls vorzugsweise über den Mittler. Das Endgerät legt eine lokale Bestätigung an, die mit dem öffentlichen Schlüssel des Autorisierenden verschlüsselt und mit dem privaten Schlüssel des Endgeräts signiert ist. Diese Bestätigung wird vom Endgerät an den Anbieter übertragen, vorzugsweise über den Mittler. Der Anbieter übermittelt die Bestätigung an den Autorisierenden, der selbige Bestätigung validiert und eine Autorisiserungsantwort an den Anbieter zurücksendet.

Insbesondere muss, falls das Endgerät offline ist und der Anbieter online, das Endgerät den öffentlichen Schlüssel des Autorisierenden kennen, so dass eine sichere und geheime Kommunikation zwischen Endgerät und Autorisierendem über den Anbieter erfolgen kann. Somit darf diejenige Partei, die mit dem Autorisierenden kommuniziert, nicht die Möglichkeit haben, Informationen einsehen oder ändern zu können, die vom Endgerät nur für den Autorisierenden gedacht sind.

Die Verbindung kann jeweils drahtlos oder nicht drahtlos erfolgen.

Im Folgenden Ausführungsbeispiel wird angenommen, dass die Beteiligten, d.h. Endgerät und Anbieter, offline sind, aber regelmäßig online gehen.

Falls zeitweise keine Verbindung zwischen Endgerät und Autorisierendem besteht, da das Endgerät zeitweise offline ist, jedoch zumindest temporär eine Verbindung zwischen Autorisierendem und Anbieter besteht, kann gemäß der vorliegenden Erfindung - obwohl das Endgerät offline ist - dennoch ein Autorisierungsverfahren durchgeführt werden.

Hierfür erhält das Endgerät, während eine Verbindung zwischen Endgerät und Autorisierendem besteht, ein kurzlebiges Offline-Zertifikat über die für es erlaubten Aktionen. Wird nun eine Ressourcenanfrage vom Endgerät an den Anbieter gesendet, so wird als Beleg vom Endgerät an den Anbieter die mit dem Offline-Zertifikat signierte Autorisierungsanfrage gesendet. Der Anbieter entscheidet nun, ob die angeforderte Ressource freigegeben werden kann oder gesperrt wird. Sobald wieder eine Verbindung zwischen Anbieter und Autorisierendem besteht, werden die signierten offline Anfragen übermittelt und vom Autorisierenden geprüft.

Auch hier wird bevorzugt eine eindeutige Identifikation verwendet, um die Mehrfachnutzung von Zertifikaten, Ressourcenanfragen, Autorisierungsanfragen und Belegen zu verhindern.

Das Offline-Zertifikat ermöglicht es, auch nur mit einer lokalen Verbindung zwischen Endgerät und Anbieter eine Autorisierung durchzuführen. Dieses Zertifikat wird bevorzugt nur an Endgeräte bzw. Kunden mit verifizierter Identität und hoher Bonität ausgestellt. Der Anbieter kann dabei bestimmte Parameter im Vorhinein festsetzen (beispielsweise einen Maximalbetrag und Bonitätsinformationen im Falle einer Zahlungsautorisierung, Sicherheitsstufe im Falle einer Zugangskontrolle, Ausstellungsdatum usw.). Bevorzugt erhält das Endgerät in regelmäßigen Abständen, wenn eine Verbindung zwischen Endgerät und Autorisierendem (Backend) besteht, ein Offline-Zertifikat mit den entsprechenden Parametern. Der Anbieter wiederum erhält bevorzugt in regelmäßigen Abständen, wenn eine Verbindung zwischen Anbieter und Autorisierendem (Backend) besteht, Sperrlisten für Offline Zertifikate der Endgeräte.

Falls also nur eine lokale Verbindung zwischen Endgerät und Anbieter besteht, jedoch keiner von beiden zum Zeitpunkt der Ressourcenanfrage eine Verbindung zum Autorisierenden hat, kann die Autorisierung dennoch mithilfe des Offline-Zertifikats durchgeführt werden. Hierzu legt der Anbieter eine lokale Autorisierungsanfrage an, die mit dem öffentlichen Schlüssel des Autorisierenden verschlüsselt und mit dem privaten Schlüssel des Anbieters signiert ist. Der Anbieter übermittelt einen öffentlichen Teil der lokalen Autorisierungsanfrage an das Endgerät. Das Endgerät legt eine lokale Bestätigung (Beleg), die der Autorisierungsanfrage zugeordnet ist, an. Diese ist mit dem öffentlichen Schlüssel des Autorisierenden verschlüsselt und mit dem privaten Schlüssel des Endgeräts signiert. Der öffentliche Teil der Bestätigung wird gemeinsam mit dem Offline-Zertifikat an den Anbieter übermittelt. Der Anbieter validiert die Bestätigung und prüft das Offline-Zertifikat sowie den öffentlichen Teil der Bestätigung. Nach der Prüfung kann der Anbieter die Ressource freigegeben oder sperren. Sobald wieder eine Verbindung zwischen Anbieter und Autorisierendem besteht, werden alle lokalen Autorisierungsanfragen und Bestätigungen an den Autorisierenden bzw. das Backend übermittelt.

Das Senden und Empfangen von und zum Endgerät kann dabei kabellos erfolgen, beispielsweise via Nahfeldkommunikation (Near Field Communication, NFC), Bluetooth LE, QR Code, Barcode oder Ton.

Die Erfindung umfasst auch ein Endgerät mit Mitteln zur drahtlosen Kommunikation, das eingerichtet ist, das oben beschriebene Verfahren durchzuführen.

Die Erfindung soll anhand der folgenden Beispiele weiter erläutert werden. Hierbei wird auf die Fälle, dass das Endgerät offline ist, der Anbieter offline ist oder Endgerät und Anbieter offline sind, eingegangen.

### Beispiel 1

Beispiel 1 betrifft eine Zugangskontrolle zu einem Gebäude. Hierbei ist die Ressource die Tür, der Autorisierende ein Server, der den Zugang zur Türe steuert, der Anbieter ein Türschloss, der Benutzer eine Person, die die Tür öffnen will und der Mittler eine Anwendung auf einem mobilen Endgerät o.ä. Dabei wird ferner angenommen, dass zwischen Türschloss (Anbieter) und Server (Autorisierendem) keine Verbindung besteht. Mit anderen Worten ist in diesem Fall der Anbieter offline.

Nach der Ressourcenanfrage durch die Anwendung (Mittler) sendet das Türschloss (Anbieter) die Öffnungs- bzw. Autorisierungsanfrage zurück an die Anwendung. Die Anwendung sendet daraufhin die Öffhungsanfrage an den Server (Autorisierender), der prüft, ob der Benutzer berechtigt ist, die Türe zu öffnen und ob die Autorisierungsanfrage mit dem privaten Schlüssel des Türschlosses signiert ist. Dem öffentlichen Teil der Autorisierungsanfrage kann dabei für den Benutzer der Name der Ressource (bspw. "Türe Nord") entnommen werden. Die Autorisierungsanfrage besitzt ferner eine spezifische ID, um Mehrfachverwendungen auszuschließen. Der entsprechende Beleg mit der Autorisierungsantwort wird dann an die Anwendung zurückgeschickt und von dort wiederum an das Türschloss weitergeleitet. Dort wird geprüft, ob der Beleg mit dem privaten Schlüssel des Servers signiert wurde und ob die ID noch nicht verwendet wurde. Falls beides zutrifft, kann der Benutzer die Türe öffnen.

Das eben angeführte Beispiel einer Zugangskontrolle dient lediglich illustrativen Zwecken, die vorliegende Erfindung kann jedoch auf jeden Autorisierungsvorgang, bei dem der Anbieter offline ist, angewendet werden.

### Beispiel 2

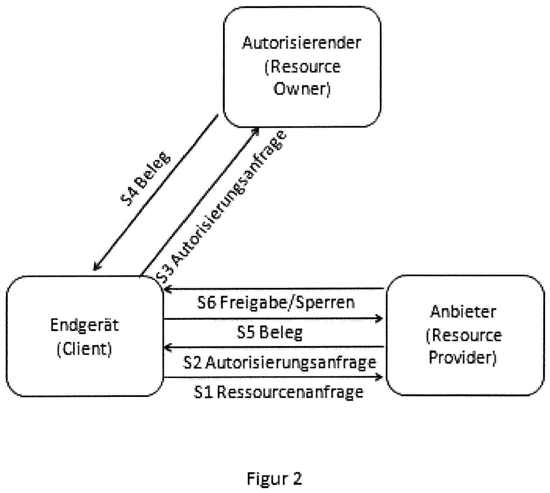

Die Erfindung kann, wie im Folgenden in Beispiel 2 mit Bezug auf Fig. 2 dargestellt wird, auch für einen Bezahlvorgang verwendet werden. Hierbei repräsentiert eine Ware die Ressource, eine Zahlungsplattform den Autorisierenden, ein Verkäufer oder ein Kassensystem den Anbieter, ein Käufer den Benutzer bzw. ein mobiles Endgerät und eine Anwendung auf dem mobilen Endgerät den Mittler. Dabei wird ferner angenommen, dass zwischen Kassensystem bzw. Verkäufer (Anbieter) und Zahlungsplattform (Autorisierendem) keine Verbindung besteht. Mit anderen Worten ist in diesem Fall der Anbieter offline.

Nach der Auswahl einer Ware kommuniziert der Käufer mittels der Anwendung auf dem Endgerät mit dem Kassensystem (Ressourcenanfrage (S1)). Das Kassensystem übermittelt die Autorisierungsanfrage, die Preis und Typ der Ware beinhaltet, zurück an die Anwendung (S2). Der öffentliche Teil der Autorisierungsanfrage ist hierbei der Warenkorb. Sollte der Käufer den Kauf bestätigen, erhält er die Autorisierungsanfrage, welche daraufhin von der Anwendung an die Zahlungsplattform übermittelt wird (S3). Erteilt die Zahlungsplattform eine Freigabe, erhält der Käufer bzw. die Anwendung einen Beleg mit der Autorisierungsantwort (S4). Dies wird wiederum an das Kassensystem weitergeleitet (S5), welches nach erfolgreicher Überprüfung die Waren freigeben oder sperren kann (S6).

### Beispiel 3

Der Fall, dass keine Verbindung zwischen Kassensystem (Anbieter) und Zahlungsplattform (Autorisierender) besteht und der Käufer (Endgerät) ebenfalls kurzzeitig offline ist wird im folgenden Beispiel 3 erläutert. In diesem Beispiel sind sowohl Anbieter als auch Endgerät offline.

Das Verfahren ist zunächst gleich wie in Beispiel 2, nur dass der Käufer im Vorhinein ein Offline-Zertifikat zur Kommunikation mit dem Kassensystem benötigt. Anstelle der Übermittlung und des Erhalts des Belegs an die und von der Zahlungsplattform wird dem Kassensystem von der Anwendung das Offline-Zertifikat übermittelt. Dieses Offline-Zertifikat wird vom Kassensystem dahingehend geprüft, ob es von der Zahlungsplattform signiert wurde, ob das Zertifikat gültig ist, ob die gleiche Autorisierungsanfrage damit signiert wurde und ob eine Berechtigung besteht. Wenn dies alles zutrifft, wird die Ware freigegeben. Sobald das Kassensystem in Verbindung mit der Zahlungsplattform steht, werden das Zertifikat und der Beleg übermittelt und entsprechend verbucht.

Die Beispiele 2 und 3, die einen Zahlungsvorgang zur Veranschaulichung des vorgestellten Autorisierungsverfahrens benutzen, sind nicht als einschränkend zu verstehen. Das oben beschriebene Verfahren für den Fall, dass Endgerät und Anbieter offline sind, kann auch für andere Vorgänge, bei denen eine Autorisierung notwendig ist, angewandt werden.

### Beipiel 4

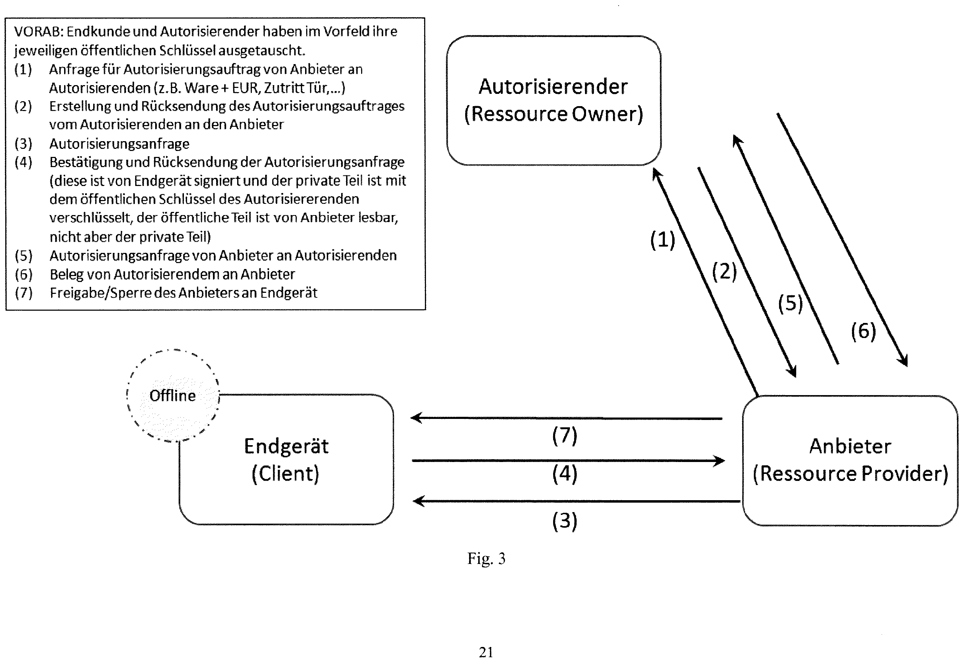

Bezug nehmend auf Figur 3 wird im Folgenden ein beispielhaftes Verfahren für den Fall, dass das Endgerät offline ist, vorgestellt. Hierfür ist Voraussetzung, dass Endgerät und Autorisierender jeweils den öffentlichen Schlüssel des anderen kennen. Zunächst übermittelt der Anbieter eine Autorisierungsanfrage an den Autorisierenden (1) (beispielsweise eine Ware mit zugehörigem Preis, den Zutritt zu einer Tür, usw.). Der Autorisierende sendet einen identifizierten Autorisierungsauftrag zurück an den Anbieter (2), der vom Anbieter an das Endgerät weiter gesendet wird (3). Das Endgerät sendet eine Bestätigung zurück an den Anbieter, die vom Endgerät signiert ist (4). Der private Teil der Bestätigung ist mit dem öffentlichen Schlüssel des Autorisierenden verschlüsselt. Die Bestätigung wird wiederum vom Anbieter an den Autorisierenden übermittelt (5), der daraufhin eine Autorisierungsantwort zurück an den Anbieter sendet (6). Je nach Inhalt der Autorisierungsantwort gibt der Anbieter im Folgenden die Ressource frei oder sperrt sie (7).

Mittels des eben vorgestellten Verfahrens kann somit auch bei fehlender Verbindung von Anbieter und Autorisierendem oder Endgerät und Autorisierendem die Freigabe von Ressourcen erfolgen. Neben den oben angeführten Beispielen zur Zahlung und Zugangsautorisierung kann das Verfahren für sämtliche Vorgänge, die eine spezielle Autorisierung und Identifikation des Benutzers erfordern, verwendet werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind.

Im Weiteren schließt die Ausdrücke "umfassen", "aufweisen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein.

## Patentansprüche

1. Autorisierungsverfahren zum Freigeben oder Sperren von Ressourcen, wobei das Verfahren, falls zwischen einem Anbieter und einem Autorisierenden keine Verbindung besteht, die folgenden Schritte aufweist:
Senden (S1), über Mittel zur drahtlosen Kommunikation, einer Ressourcenanfrage von einem Endgerät an den Anbieter, wobei das Senden über einen Mittler erfolgt,
Senden (S2), über Mittel zur drahtlosen Kommunikation, einer Autorisierungsanfrage vom Anbieter zum Endgerät, wobei das Senden über den Mittler erfolgt,
Senden (S3), über Mittel zur drahtlosen Kommunikation, der Autorisierungsanfrage vom Endgerät zum Autorisierenden,
Senden (S4), über Mittel zur drahtlosen Kommunikation, eines Belegs mit einer Autorisierungsantwort vom Autorisierenden zum Endgerät,
Senden (S5), über Mittel zur drahtlosen Kommunikation, des Belegs vom Endgerät zum Anbieter,
Freigabe oder Sperren der Ressource (S6) entsprechend der im Beleg enthaltenen Autorisierungsantwort und
wobei das Verfahren, falls zeitweise keine Verbindung zwischen Endgerät und Autorisierendem besteht, die folgenden Schritte aufweist:
Senden, über Mittel zur drahtlosen Kommunikation, einer Ressourcenanfrage von einem Endgerät an einen Anbieter, wobei das Senden über einen Mittler erfolgt,
Senden, über Mittel zur drahtlosen Kommunikation, einer Autorisierungsanfrage vom Anbieter zum Endgerät, wobei das Senden über den Mittler erfolgt,
Senden, über Mittel zur drahtlosen Kommunikation, eines Belegs mit einem vom Autorisierenden im Vorhinein ausgestellten Zertifikat vom Endgerät an den Anbieter,
Freigabe oder Sperren der Ressource entsprechend des Belegs mit dem Zertifikat.

2. Autorisierungsverfahren zum Freigeben oder Sperren von Ressourcen gemäß Anspruch 1, wobei das Verfahren ferner das Bereitstellen eines öffentlichen und eines privaten Schlüssels jeweils für den Anbieter und den Autorisierenden aufweist und
wobei Anbieter und Autorisierender jeweils den anderen öffentlichen Schlüssel kennen.

3. Autorisierungsverfahren zum Freigeben oder Sperren von Ressourcen gemäß Anspruch 1 oder 2, wobei die Autorisierungsanfrage mit einem privaten Schlüssel des Anbieters signiert ist und einen öffentlichen und einen privaten Teil enthält,
wobei der öffentliche Teil der Autorisierungsanfrage für das Endgerät zugänglich ist und wobei der private Teil der Autorisierungsanfrage mit einem öffentlichen Schlüssel des Autorisierenden verschlüsselt ist.

4. Autorisierungsverfahren zum Freigeben oder Sperren von Ressourcen gemäß einem der vorstehenden Ansprüche, wobei der Mittler eine Anwendung auf dem Endgerät ist.

5. Endgerät, wobei das Endgerät aufweist:
Mittel zur drahtlosen Kommunikation, die, falls keine Verbindung zwischen einem Anbieter und einem Autorisierenden besteht, eingerichtet sind zum Senden einer Ressourcenanfrage von dem Endgerät an den Anbieter, wobei das Senden über einen Mittler erfolgt,
wobei die Mittel zur drahtlosen Kommunikation ferner eingerichtet sind, eine Autorisierungsanfrage vom Anbieter über den Mittler zum Endgerät zu empfangen, und
die Autorisierungsanfrage vom Endgerät zu dem Autorisierenden zu senden, und
einen Beleg mit einer Autorisierungsantwort betreffend der Freigabe oder dem Sperren der Ressource vom Autorisierenden zum Endgerät zu empfangen, und den Beleg vom Endgerät zum Anbieter zu senden,
wobei die Mittel zur drahtlosen Kommunikation, falls keine Verbindung zwischen Endgerät und Autorisierendem besteht, ferner eingerichtet sind, eine Ressourcenanfrage von dem Endgerät an einen Anbieter zu senden, wobei das Senden über einen Mittler erfolgt, und
eine Autorisierungsanfrage vom Anbieter über den Mittler zum Endgerät zu empfangen, und einen Beleg betreffend der Freigabe oder dem Sperren der Ressource mit einem vom Autorisierenden im Vorhinein ausgestellten Zertifikat vom Endgerät an den Anbieter zu senden.

## Claims

1. An authorisation method for the release or blocking of resources, wherein the method comprises the following steps in case there is no connection between a provider and a resource owner:
using wireless communication means, transmission (S1) of a resource request from a client to the provider, the transmission being made via an agent,
using wireless communication means, transmission (S2) of an authorisation request from the provider to the client, the transmission being made via the agent,
using wireless communication means, transmission (S3) of the authorisation request from the client to the resource owner,
using wireless communication means, transmission (S4) of a receipt comprising an authorisation response from the resource owner to the client,
using wireless communication means, transmission (S5) of the receipt from the client to the provider,
release or blocking of the resource (S6) in accordance with the authorisation response comprised in the receipt and
wherein the method comprises the following steps in case the connection between the client and the resource owner is temporarily interrupted:
using wireless communication means, transmission of a resource request from a client to a provider, the transmission being made via an agent;
using wireless communication means, transmission of an authorisation request from the provider to the client, the transmission being made via the agent;
using wireless communication means, transmission of a receipt comprising a certificate issued by the resource owner in advance from the client to the provider,
release or blocking of the resource in accordance with the receipt comprising the certificate.

2. The authorisation method for the release or blocking of resources according to claim 1, wherein the method further comprises the provision of a public and a private key for both the provider and the resource owner and
wherein the provider and the resource owner know each other's public key.

3. The authorisation method for the release or blocking of resources according to claim 1 or 2, wherein the authorisation request is signed with a private key of the provider and comprises a public and a private portion,
wherein the public portion of the authorisation request is accessible to the client and wherein the private portion of the authorisation request is encrypted with a public key of the resource owner.

4. An authorisation method for the release or blocking of resources according to any of the preceding claims, wherein the agent is an application on the client.

5. A client, the client comprising:
wireless communication means adapted to transmit a resource request from the client to a provider in case there is no connection between a provider and a resource owner, the transmission being made via an agent,
wherein the wireless communication means are further adapted to receive an authorisation request from the provider via the agent to the client and
to transmit the authorisation request from the client to a resource owner and
to receive a receipt comprising an authorisation response regarding the release or the blocking from the resource owner to the client and transmit the receipt from the client to the provider,
wherein, if there is no connection between the client and the resource owner, the wireless communication means are further adapted to transmit a resource request from the client to a provider, the transmission being made via an agent, and
to receive an authorisation request from the provider via the agent to the client and
to transmit a receipt regarding the release or the blocking comprising a certificate issued by the resource owner in advance from the client to the provider.

## Revendications

1. Procédé d'autorisation pour la libération ou le blocage de ressources, ledit procédé comprenant les étapes suivantes, si aucune connexion n'est présentée entre un fournisseur et un ordonnateur :
envoi (S1), via des moyens de communication sans fil, d'une demande de ressource d'un terminal au fournisseur, ledit envoi étant effectué en passant par un intermédiaire,
envoi (S2), via des moyens de communication sans fil, d'une demande d'autorisation du fournisseur au terminal, ledit envoi étant effectué en passant par l'intermédiaire,
envoi (S3), via des moyens de communication sans fil, de la demande d'autorisation du terminal à l'ordonnateur,
envoi (S4), via des moyens de communication sans fil, d'un accusé de réception avec une réponse d'autorisation de l'ordonnateur au terminal,
envoi (S5), via des moyens de communication sans fil, de l'accusé de réception du terminal au fournisseur,
libération ou blocage de la ressource (S6) en fonction de la réponse d'autorisation contenue dans l'accusé de réception, et
ledit procédé comprenant les étapes suivantes, si aucune connexion n'est temporairement présentée entre le terminal et l'ordonnateur :
envoi, via des moyens de communication sans fil, d'une demande de ressource d'un terminal à un fournisseur, ledit envoi étant effectué en passant par un intermédiaire,
envoi, via des moyens de communication sans fil, d'une demande d'autorisation du fournisseur au terminal, ledit envoi étant effectué en passant par l'intermédiaire,
envoi, via des moyens de communication sans fil, d'un accusé de réception avec un certificat préalablement établi par l'ordonnateur, du terminal au fournisseur,
libération ou blocage de la ressource en fonction de l'accusé de réception avec le certificat.

2. Procédé d'autorisation pour la libération ou le blocage de ressources selon la revendication 1, ledit procédé comprenant en outre la préparation d'une clé publique et d'une clé privée respectivement pour le fournisseur et pour l'ordonnateur, et
où le fournisseur et l'ordonnateur connaissent chacun l'autre clé publique respective.

3. Procédé d'autorisation pour la libération ou le blocage de ressources selon la revendication 1 ou la revendication 2, où la demande d'autorisation est signée avec une clé privée du fournisseur et contient une partie publique et une partie privée,
où la partie publique de la demande d'autorisation est accessible pour le terminal, et où la partie privée de la demande d'autorisation est cryptée avec une clé publique de l'ordonnateur.

4. Procédé d'autorisation pour la libération ou le blocage de ressources selon l'une des revendications précédentes, où l'intermédiaire est une application sur le terminal.

5. Terminal, ledit terminal comprenant :
des moyens de communication sans fil, lesquels sont prévus pour envoyer une demande de ressource du terminal au fournisseur, si aucune connexion n'est présentée entre un fournisseur et un ordonnateur, ledit envoi étant effectué en passant par un intermédiaire, où les moyens de communication sans fil sont en outre prévus pour recevoir une demande d'autorisation du fournisseur au terminal en passant par l'intermédiaire, et
pour envoyer la demande d'autorisation du terminal à l'ordonnateur, et
pour recevoir un accusé de réception avec une réponse d'autorisation relative à la libération ou au blocage de la ressource de l'ordonnateur au terminal, et envoyer l'accusé de réception du terminal au fournisseur,
les moyens de communication sans fil étant en outre prévus pour envoyer une demande de ressource du terminal à un fournisseur, si aucune connexion n'est présentée entre le terminal et l'ordonnateur, ledit envoi étant effectué en passant par un intermédiaire, et
pour recevoir une demande d'autorisation du fournisseur au terminal en passant par l'intermédiaire, et
envoyer du terminal au fournisseur un accusé de réception relatif à la libération ou au blocage de la ressource avec un certificat préalablement établi par l'ordonnateur.
